# EUROPEAN PATENT APPLICATION

(11) **EP 1 103 732 A2**
(43) Date of publication of application: **30.05.2001**
(21) Application number: 00310425.4
(22) Date of filing: 23.11.2000
(51) Int. Cl.: F16B 19/10

(54) **Swaged blind fastener**

(30) Priority: 25.11.1999 GB 9927772
(71) Applicant: EMHART INC., Newark, Delaware 19711 (US)
(72) Inventor: Smith, Dan R., Castle Bromwich, Birmingham B36 9DG (GB)
(74) Representative: Bell, Ian Stephen

(57) **Abstract**

A swaging fastener comprising a body having a generally cylindrical shank, a swaging collar mounted on one end of the shank and a bore which extends axially through the collar and through at least part of the length of the shank; and a mandrel comprising a mandrel head located adjacent an end of the shank remote from the collar, a stem attached to the mandrel head which passes through the length of the bore of the body and which extends beyond the collar and which comprises a breakneck located along the length of the stem, characterised in that the shank and the collar are formed as two separate entities, the collar being mounted onto the shank.

## Description

This invention relates to blind fasteners, and in particular to a blind fastener having a swaging collar.

Swaged blind fasteners are well known and comprise a mandrel and a body. The body comprises a tubular shank having at one end an integral swaging collar. A bore passes through the swaging collar and through the length of the shank. The mandrel comprises a mandrel head having a stem attached to it. The stem of the mandrel is located within the bore, the mandrel head abutting against the end of the shank remote from the swaging collar. The stem passes through the length of the bore and the swaging collar and extends from the body of the rivet. The diameter of the mandrel head is substantially equal to the diameter of the shank, the shank having a substantially uniform circumference along its length. The stem of the mandrel comprises three sections. The first section adjacent the mandrel head has a constant uniform diameter which is substantially equal to the diameter of the bore of the shank. The second section located adjacent the first section remote from the mandrel head, comprises a plurality of grooves and associated ridges formed around the outer circumference of the stem. The second section is located within the shank and swaging collar of the body of the fastener. The third section is located adjacent the second section remote from the first section and forms the exposed part of the stem. The third section is similar to the second section except that the number of grooves per unit length has been substantially increased. The purpose of the grooves in the third section is to assist in the setting tool gripping the stem of the mandrel in order to pull the mandrel to set the fastener. The function of the grooves in the second section is to enable, when the fastener is being set, the setting tool to swage the swaging collar into the grooves on the second section so that the collar is forced onto the ridges and into the grooves in order to grip the mandrel and fix it in place.

The fastener is set by inserting the pulling portion of the stem into the pulling jaws of the setting tools whilst the shaped nose piece of the setting tool engages the swaging collar. As the pulling jaws retract the blind side of the fastener collapses forming the characteristic blind side spread and as the setting load further increases the swaging collar is forced inwardly so that the collar material enters the holding grooves of the second section of the stem. On completion of the setting cycle, the setting force increases until the setting pin breaks at a predetermined point and load. In known designs of blind fasteners of the swaged collar variety, the shank and the swaging collar are formed in a one piece construction. This results in the whole of the body of the fastener having the same physical qualities. This can cause problems as the functions carried out by the shank and by the swaging collar are distinctly different, for instance if the swaging collar were deformed into the grooves before the shank had been set correctly.

Additionally since the swaging collar and shank are in one piece then for every different material thickness to be secured a different shank length is required. This involves different and costly tooling for manufacture for each length.

Accordingly, there is provided, a blind fastener comprising:
a body having a generally cylindrical shank, a swaging collar located at one end of the shank and a bore which extends axially through the swaging collar and through the length of the shank; and
a mandrel comprising a mandrel head located adjacent an end of the shank remote from the swaging collar, the stem attached to the mandrel head which passes through the length of the bore of the body and extends beyond the swaging collar, characterised in that the swaging collar and the shank are formed as two separate parts.

By constructing the fastener in this method, it is possible for the swaging collar portion to be slightly harder whilst the shank portions should be fully annealed or soft so that following collapse and setting the swaging collar then can engage the holding grooves on the mandrel thus ensuring a correct differential between setting and swaging. Furthermore, it enables the swaging collar and shank to be manufactured from different materials. This provides the advantage of providing different clamp loads and different swaging loads thus fine tuning the fastener to particular applications.

Additionally since the tubular part of the shank is significantly of lower cost than the swaging collar which is common for a range of products, then there is a significant cost advantage by just varying the tubular portion.

One method of mounting the collar is by a press fitting the shank into a recess on the collar. Alternatively, the collar can be attached to the shank by means of a flexible adhesive.

Ideally, grooves are formed around the outer circumference of a shank in at least a zone encompassed by the collar.

For instance the collar can be formed from a low carbon steel and the shank can be formed from a higher carbon steel than the collar or the collar and shank can be from differing grades of aluminium.

An embodiment of the fastener will now be disclosed with reference to the accompanying drawings, of which:-
Figure 1 shows a side view of the fastener with part of the shank and swaging collar cut away;
Figures 2A to 2D show the setting of the fastener;
Figure 3 shows a cross-section of the fastener after it has been set.

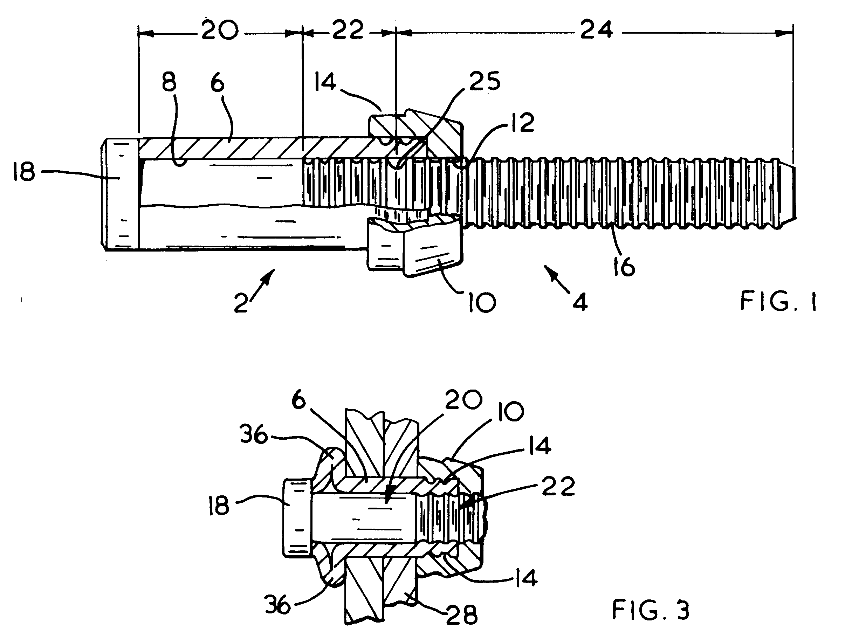

Referring to Figure 1, the blind fastener comprises a body (2) and a mandrel (4). The body (2) comprises a shank (6) which is a substantially tubular shell having a bore (8) which passes through the length of the shank (6). At one end of the shank (6) is mounted a swaging collar (10) which also comprises a bore (12) which, when mounted on the shank (6), aligns with the bore (8) of the shank (6). The part of the outer surface of the shank (6) which is enclosed by the swaging collar (10) comprises a plurality of grooves (14) which are formed around the circumference of the outer surface of the shank (6).

The mandrel (4) comprises a pulling stem (16) and a mandrel head (18). The mandrel stem (16) located within the aligned bores (8, 12) of the shank (6) and the swaging collar (10), the mandrel head abutting against the end of the shank remote from the swaging collar (10), the pulling stem (16) passing through the length of the bores (8, 12) and extends beyond the body of the rivet away from the swaging collar (10). The stem (16) comprises three sections. The first section (20) located within the shank (6) which has a uniform cross-section substantially equal to that of the bore (8). A second section (22) adjacent the first section (20) but remote from the mandrel head (18) comprises a plurality of the grooves formed around the circumference of the stem (16). The third section (24) which is located adjacent the second section (22) remote from the first section (20), forms the exposed part of the stem (16) and, in a similar manner to that of the second section (22), comprises a plurality of grooves located around the outer circumference of the pulling stem (16). However, in the third section the frequency of the grooves per unit length is substantially increased. A breakneck (25) is formed between the second (22) and third (24) sections.

The shank (6) and the swaging collar (10) are formed as two distinct separate entities and are formed from different materials which have been treated in different ways. The swaging collar (10) is press fit into a recess formed on the shank to hold the swaging collar (10) on the shank (16) to form the body. The collar (10) is formed from a slightly higher carbon steel and the body shank of a slightly higher carbon steel thus giving facility to varying the setting and crimping parameters.

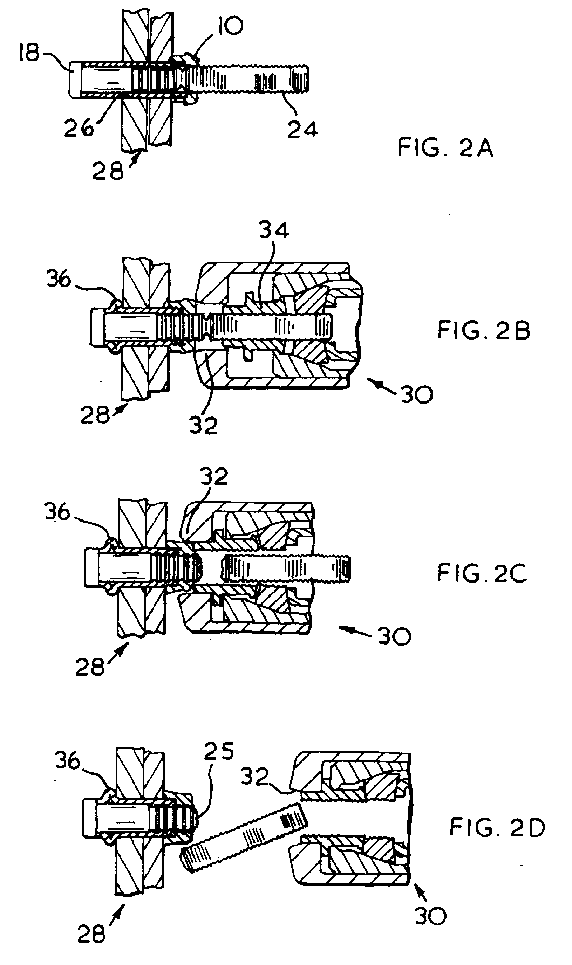

The setting process for the swage fastener will now be described with reference to Figures 2A to 2D. The fastener is inserted into a bore (26) formed through a workpiece (28) as shown in Figure 2A. The third section (24) of the pulling stem (16) of the mandrel (4) is inserted into the pulling jaws (34) of the setting tool (30) in known manner whilst the shaped nose piece (32) of the setting tool engages the swaging collar (10). The pulling jaws retract the pulling stem (16) whilst holding the swaging collar (10) stationary which results in the collapse of the end of a shank forming the characteristic blind side spread (36) as shown in Figure 2B. As the setting load further increases, the swaging collar (10) is forced inwardly so that the collar material enters the grooves (14) formed on the end of the shank (6) then progressively deforms the end of the shank into the holding grooves of the second section. This is best shown in Figure 3. The setting of the fastener is completed when the force increases until the setting pin breaks at the breakneck. The remainder of the pin is then discarded.

## Claims

1. A swaging fastener comprising:
a body having a generally cylindrical shank, a swaging collar mounted on one end of the shank and a bore which extends axially through the collar and through at least part of the length of the shank; and
a mandrel comprising a mandrel head located adjacent an end of the shank remote from the collar, a stem attached to the mandrel head which passes through the length of the bore of the body and which extends beyond the collar and which comprises a breakneck located along the length of the stem, characterised in that the shank and the collar are formed as two separate entities, the collar being mounted onto the shank.

2. A swaging fastener as claimed in claim 1 wherein the swaging collar is press fitted into a recess on the collar.

3. A swaging fastener as claimed in claim 1 wherein the collar is attached to the shank by means of a flexible adhesive.

4. A swaging fastener as claimed in any one of the previous claims wherein grooves are formed around the outer circumference of a shank in at least a zone encompassed by the collar.

5. A swaging fastener as claimed in any one of the previous claims wherein the collar is formed from a higher carbon steel or slightly harder material than the shank.

6. A swaging fastener as claimed in any one of the previous claims wherein the shank is formed from a lower carbon steel or slightly softer, more malleable material than the collar.
